**Europäisches Patentamt**

**European Patent Office**

**Office européen des brevets**

(19)

(11) Veröffentlichungsnummer: **0 099 320**
**A2**

(12) ## EUROPÄISCHE PATENTANMELDUNG

(21) Anmeldenummer: **83710036.1**

(22) Anmeldetag: **15.06.83**

(51) Int. Cl.³: **C 02 F 1/10**
**C 02 F 1/14**

(30) Priorität: **16.06.82 DE 3222537**

(43) Veröffentlichungstag der Anmeldung:
**25.01.84 Patentblatt 84/4**

(84) Benannte Vertragsstaaten:
**AT BE CH DE FR GB IT LI LU NL SE**

(71) Anmelder: **Beil, Gerhard**
**Fuhrmannsweg 3**
**D-7766 Gaienhofen 2(DE)**

(72) Erfinder: **Beil, Gerhard**
**Fuhrmannsweg 3**
**D-7766 Gaienhofen 2(DE)**

(74) Vertreter: **Hiebsch, Gerhard F., Dipl.-Ing.**
**Erzbergerstrasse 5A Postfach 464**
**D-7700 Singen 1(DE)**

(54) **Verfahren und Vorrichtung zum Entsalzen von Wasser.**

(57) Ein Verfahren zum Entsalzen von Wasser, insbesondere von Meerwasser, unter Temperaturerhöhung sowie eine Vorrichtung dazu mit einem Wärmegebar sollen es ermöglichen, ohne hohen Energieaufwand in einfacher Weise salzarmes Wasser zu gewinnen.

Dies wird dadurch erreicht, daß salzhaltiges Wasser in einer ersten Stufe erwärmt und dann in einer zweiten Stufe zerstäubt wird, wonach das dabei entstehende Luft/Wasser-Gemisch als Primärluftkreis in einer weiteren Stufe einer Kondensation unterzogen und vor dieser durch Tropfenabscheider geführt wird. Vor der Kondensation soll dieses Luft/Wasser-Gemisch von Aerosolen befreit werden.

Dieses Verfahren wird mit einer Vorrichtung durchgeführt, welche einen Sprühraum (11$_s$) mit wenigstens einer Sprühdüse (9) für das in einem Primärluftkreis (y) einzuspeisende Salzwasser (W) aufweist, dem ein Kondensationsraum (12) mit gekühlter Kondensationsfläche (37; 44; 49) nachgeschaltet ist, wobei der Sprühdüse (9) in Sprührichtung (z) Tropfenabscheiderprofile (30) nachgeordnet sind.

EP 0 099 320 A2

./...

Fig.1

# DIPL.-ING. GERHARD F. HIEBSCH  0099320

## PATENTANWALT

PROFESSIONAL REPRESENTATIVE BEFORE THE EUROPEAN PATENT OFFICE

MANDATAIRE AGRÉÉ PRÈS L'OFFICE EUROPÉEN DES BREVETS


Gerhard Beil
============

Fuhrmannsweg 3
==============

7766 Gaienhofen 2
=================

D-7700 SINGEN 1
Erzbergerstr. 5a

Telegr./Cables:
Bodenseepatent
Telex 7 93 850
Telefon (07731) 63075
                63076

Mein Zeichen
My ref./Ma réf   B-146 /EPA

I/ab

Datum/Date

Verfahren und Vorrichtung zum Entsalzen von Wasser

Die Erfindung betrifft ein Verfahren zum Entsalzen von
Wasser, insbesondere von Meerwasser, unter Temperaturerhöhung sowie eine Vorrichtung dazu mit einem Wärmegeber.

Unter dem Entsalzen versteht man das vollständige oder
teilweise Entfernen der im Wasser gelösten Mineralstoffe
zur Gewinnung von Trink- und Brauchwasser. Hierzu sind
Verfahren mit einem Verdampfungsvorgang, mit Ionenaustausch bekannt, außerdem Elektrodialyse sowie die Druckfiltration durch ausschließlich für Wasser durchlässige
Membranen.

Bei Anwendung dieser Verfahren wird eine vollständige
Trennung von Wasser und Salz nicht durchgeführt, vielmehr das Salz als etwa 7 %-ige Salzsole abgeleitet.

- 2 -

Für die Gewinnung von Trinkwasser, dessen Gesamtsalzgehalt etwa 500 mg/l nicht übersteigen soll, wird im
allgemeinen Brack- oder Meerwasser verdampft, also unter
Zuführung von Wärme -- und damit hohem Verbrauch von
Energie -- Dampf erzeugt. Allein der hierzu benötigte
Energiebedarf mindert die Möglichkeiten einer wirtschaftlich
und verfahrenstechnisch vertretbaren Gewinnung von Trinkwasser.

Angesichts dieser Gegebenheiten hat sich der Erfinder
das Ziel gesetzt, ein Verfahren und eine Vorrichtung
der eingangs erwähnten Art zu schaffen, dank deren
es möglich ist, ohne hohen Energieaufwand in einfacher
Weise salzarmes Wasser zu gewinnen.

Zur Lösung dieser Aufgabe führt, daß das salzhaltige Wasser
oder Salzwasser in einer ersten Stufe erwärmt und dann
in einer zweiten Stufe zerstäubt wird, wonach das dabei
entstehende Luft/Wasser-Geschmisch als Primärluftkreis
in einer weiteren Stufe einer Kondensation unterzogen
wird. Dabei soll vor der Kondensation das Luft/Wasser-
Gemisch von Aerosolen befreit werden, wozu dieses
Luft/Wasser-Gemisch bevorzugt durch Tropfenabscheider
geführt wird.

Beim erfindungsgemäßen Verfahren erfolgt also keine
Dampfbildung; das Wasser wird nicht gekocht, sondern
unterhalb der Aggregatsveränderung "flüssig-dampfförmig"
durch einen Sprühnebel in feine Tröpfchen geteilt, mit
denen die Luft beladen wird und zwar mit ihrer von
Natur aus festliegenden Größe des Wasserdampfgehaltes.

Erfindungsgemäß wird das Salzwasser vor Eintritt in die
Sprühdüse auf 60° (bis etwa 80°) C erwärmt, was beispielsweise durch Sonnenkollektoren energiesparend
möglich ist.

Die bevorzugt verwendete -- nachfolgend noch näher zu
beschreibende -- Sprühdüse erzeugt das genannte Luft/
Wasser-Gemisch und treibt dieses durch die Tropfenabscheiderprofile in einen nachgeschalteten Sammelraum,
in dem das hoch gesättigte Luft/Wasser-Gemisch mit etwa
100 % relativer Feuchte eintritt und dabei frei ist
von Aerosolen, die ohne Probleme durch Einstellung des
Düsendruckes und geschickte Wahl der Tropfenabscheiderprofile von den weiteren Verfahrensschritten ferngе-
halten werden können.

Im nachfolgenden Kondensationsraum erfolgt erfindungsgemäß das Abscheiden der Wassertracht aus dem Luft/Wasser-
Gemisch, welches dabei von 50° (bis 70°) C heruntergekühlt wird auf eine Temperatur von 30 bis 50° C, gemessen an der verbleibenden Luft des Primärluftkreises,
die erneut dem Sprühraum zugeführt wird.

Erfindungsgemäß erfolgt die Kondensation des Wassers
aus dem Primärluftkreis an Flächen, die von einem Sekundärluftkreis gekühlt werden, beispielsweise im Gegenstrom an Wärmeaustauschflächen oder unter Verwendung
eines sogenannten Wärmerohres mit einem kühlen Ende,
an dem der Kondensationsvorgang stattfindet unter Abgabe von Wärme, welche im Wärmerohr zu einem warmen
Ende fließt und dort -- beispielsweise von jenem Sekun-
därluftkreis-- abgenommen werden können.

Im Rahmen der Erfindung liegt es aber auch, die Kondensation des Wassers aus dem Primärluftkreis mittels
eines -- von einem Kühlmittel durchflossenen -- Kühlregister, vorzunehmen, welches -- nach einem weiteren
Merkmal der Erfindung -- seinerseits im Kühlmittelkreislauf eines Verdunstungskühlers od. dgl. liegen
kann.

Die Sekundärluft kann ohne weiteres aus der Umgebungsluft genommen werden und erwärmt sich dann normalerweise
auf 40 bis 60° C.

Die Vorrichtung zum Entsalzen von Wasser umfaßt erfindungsgemäß einen Befeuchtungs- oder Sprühraum mit
wenigstens einer Sprühdüse für das in den Primärluftkreis einzuspeisende Salzwasser sowie einen Kondensationsraum mit gekühlten Kondensationsflächen, die
im Primärluftkreis der Sprühdüsen nachgeschaltet sind.
Zwischen dieser und dem Kondensationsraum ist vorteilhafterweise eine Einrichtung mit Tropfenabscheiderprofilen vorgesehen, an denen die groben Tropfen zurückgehalten werden und durch deren Spalte das hochgesättigte Luft/Wasser-Gemisch mit etwa 100 % relativer
Feuchte aufsteigt; bevorzugt ist dabei die Ausführung
mit oberhalb der Düse/n vorgesehenen Tropfenabscheiderprofilen und darüber liegendem Gemischsammelraum, dem
erfindungsgemäß der Kondensationsraum seitlich benachbart ist, so daß der Primärluftkreis im Kondensationsraum nach unten gerichtet ist; die entfeuchtete Luft
kann somit von unten her erneut der Sprühdüse zugeführt werden.

Im Rahmen der Erfindung liegt es auch, daß die Sprühdüsen und die Tropfenabscheiderprofile aufeinander
so abgestimmt werden, daß die Aerosolfreiheit des
Luft/Wasser-Gemisches gewährleistet ist; eine derartige Maßnahme durch Kombination eines bestimmten
Düsendruckes mit Tropfenabscheiderprofilen möglichst
eckigen Querschnittes ist dem Fachmann anhand gegeben.

Als Kondensationsflächen sind den Tropfenabscheiderprofilen in Abstand zueinander vorgesehene Wandungen
nachgeordnet, die wechselnd benachbarte Strömungsräume einerseits für den Primärluftkreis und anderseits für den Sekundärluftkreis bilden, so daß jeweils eine fallende Primärluftströmung zwischen zwei
steigenden Sekundärluftzügen liegt. Hierbei hat sich
als besonders handhabungsgünstig die Verwendung von
Kondensatorplatten erwiesen, welche jeweils aus
zwei in Abstand zueinander verlaufenden Wandungen
und diese miteinander verbindenden Querstegen --
bevorzugt aus Kunststoff -- bestehen; zwischen jenen
Wandungen bilden die Querstege Strömungskanäle, durch
die man insbesondere die Sekundärluft ziehen lassen
kann; die Primärluft wird durch Zwischenräume oder
Luftspalte geleitet, welche zwischen jeweils zwei
in Abstand zueinander stehenden Kondensatorplatten
begrenzt sind.

Statt dieser beschriebenen Kondensatorplatten oder
entsprechender Flächen können den Tropfenabscheiderprofilen Kühlregister nachgeordnet sein, an deren
Außenflächen das Kondensat entsteht.

B-146 /EPA                                              - 6 -

Auch ist es denkbar, in den Kondensationsraum ein
sogenanntes Wärmerohr mit der Fähigkeit, Wärme
von einem kühler bleibenden zu einem wärmeren
Ende zu transportieren, einragen zu lassen, dessen
wärmeres Ende dann beispielsweise durch einen Sekundärluftkreis oder in anderer Weise die Wärme entzogen wird.

Erfindungsgemäß ist die Sprühdüse -- bzw. deren mehrere
-- am Ende eines erwärmtes Salzwasser führenden Zulaufrohres unterhalb der Tropfenabscheiderprofile und in
Abstand zu ihnen vorgesehen, wobei oberhalb der Tropfenabscheiderprofile ein Kopf- oder Sammelraum für das
gesättigte Luft/Wasser-Gemisch verbleibt; an diesen
Kopf- oder Sammelraum schließt -- wie gesagt bevorzugt
seitlich -- der Kondensationsraum an.

Dazu hat es sich als günstig erwiesen, jenes Zulaufrohr durch einen Sonnenkollektor zu führen, um das
Salzwasser vor der Sprühdüse mit sogenannter alternativer
Energie aufzuladen; selbstverständlich sollte für wenig
sonnenträchtige Zeiten eine konservative Energiezufuhreinrichtung vorhanden sein; zum Erwärmen des Salzwassers wird erkennbarerweise sehr viel weniger Energie
verbraucht als dies beim üblichen Verdampfungsvorgang
notwendig wäre.

Als besonders günstig hat es sich erwiesen, die Tropfenabscheiderprofile oberhalb der Sprühdüse/n geneigt anzuordnen und zwar in einem spitzen Winkel zur Horizontalen.
Diese Tropfenabscheiderprofile enden mit ihrem tiefen
Teil an Abweiserschikanen oder ähnlichen Trennelementen
zwischen dem Sprüh- oder Befeuchtungsraum und dem
Kondensationsraum. Dabei können unterhalb der Abweiseschikanen noch Lamelleneinbauten vorhanden sein, durch
welche der Primärluftkreis zieht.

                                                       - 7 -

B-146 /EPA                                      - 7 -

Bei einer besonders bevorzugten Ausführungsform der
Vorrichtung wird der Primärluftkreis allein durch
die Injektorwirkung der Sprühdüse und die herrschende
Thermik aufrechterhalten, wobei eine Geschwindigkeit
von 1 m/sec. ausreicht. Jedoch ist es auch denkbar,
zur Unterstützung der Injektorwirkung in dem Primärkreislauf Lüfter zu hängen, wie diese auch für den
Sekundärluftkreis Verwendung finden. Derartige Lüfter
ausreichender Dimensionierung haben einen geringen
Verbrauch an Energie, beispielsweise 250 Watt.

Die bevorzugte Ausführungsform der Vorrichtung weist ein
gemeinsames Gehäuse für Befeuchtungs- und Kondensationsraum auf, welches -- in Abhängigkeit von den bereits
beschriebenen unterschiedlichen Kondensationsflächen
-- noch oben gänzlich oder teilweise abgedeckt ist.

Bevorzugt soll eine Sprühdüse mit kalottenartigem Innenraum Verwendung finden, der die Sprühkammer querschnittlich
halbkreisförmig überspannt, wobei die Höhe der Sprühkammer etwa dem Radius des Innenraumquerschnittes des
Düsenmundstückes entspricht. Dabei soll das Düsenmundstück zwischen einem die Sprühkammer aufnehmenden
Düsenkörper und einem mit diesem lösbar verbundenen
Düsenkopf auswechselbar angebracht sein. Dieses auswechselbare Düsenmundstück kann bei Verschleiß ohne
Demontage der Düse ausgewechselt werden.

Eine derart ausgestaltete Sprühdüse ist über einen Bereich
von etwa 1 bis 3 atü regelbar und erlaubt eine außergewöhnlich feine Zerstäubung. Das günstige Sprühbild
der Düse ist abhängig von der Ausgestaltung des eigentlichen Düseninnenraumes, nämlich von der besonderen Form des Mundstückinnenraumes, dessen halbkreisförmiger
Querschnitt an einen gedrungenen Zylinderraum bestimmten
Ausmasses anschließt.

Das Düsenmundstück soll aus einem kalottenartig geformten Werkstück mit radial abstehendem Kragen bestehen, der zwischen Düsenkörper und Düsenkopf gehalten ist und infolgedessen nach Entfernen des Düsenkopfes vom Düsenkörper gelöst zu werden vermag.

B-146 /EPA                                            - 9 -


Weitere Vorteile, Merkmale und Einzelheiten der Erfindung
ergeben sich aus der nachfolgenden Beschreibung bevorzugter Ausführungsbeispiele sowie anhand der Zeichnung;
diese zeigt skizzenhaft in


    Fig.   1: einen Längsschnitt durch eine erfindungsgemäße
              Vorrichtung;


    Fig.   2: den Querschnitt durch Fig. 1 nach deren Linie
              II - II;


    Fig.   3: ein vergrößertes Detail aus Fig. 2 in geschnittener Schrägsicht;


    Fig.   4: einen Teil eines weiteren Ausführungsbeispiels
              der Vorrichtung;


    Fig.   5,

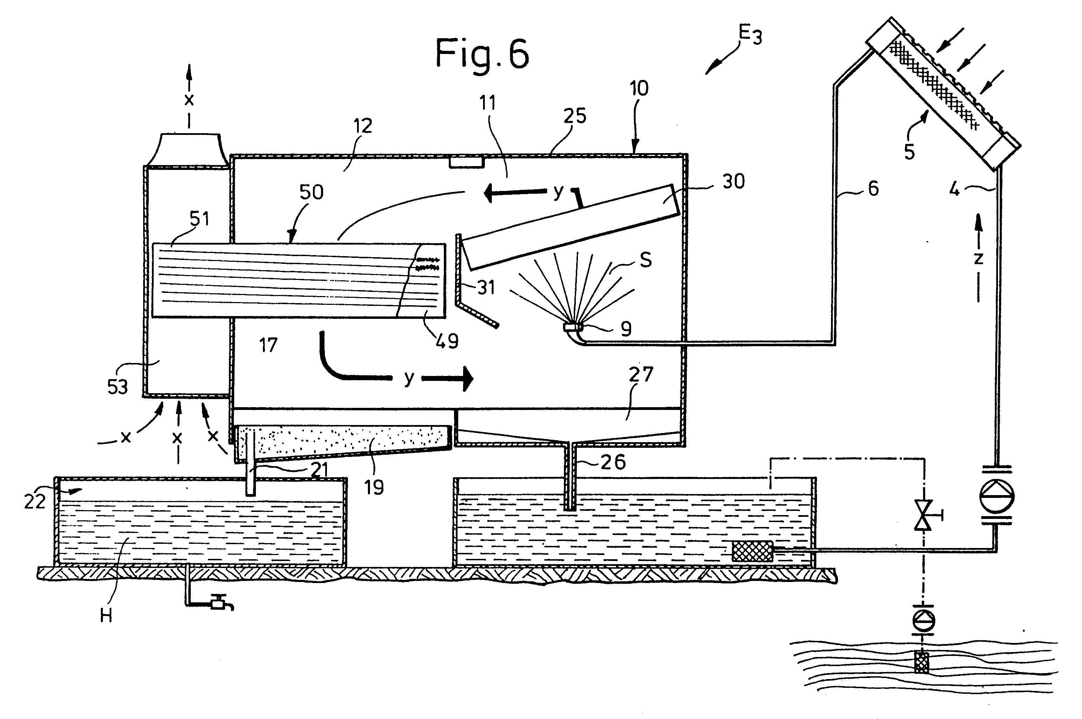

    Fig.   6: zwei andere Ausführungsformen der erfindungsgemäßen Vorrichtung jeweils im Längsschnitt;


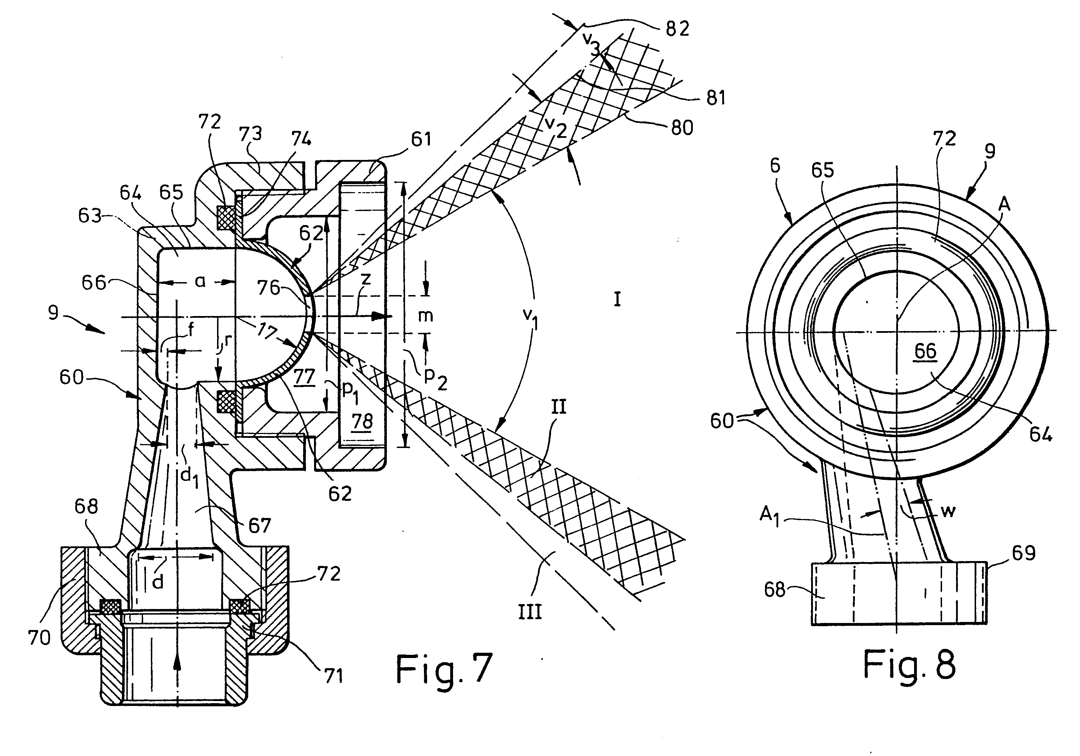

    Fig.   7: den schematisierten Längsschnitt durch eine

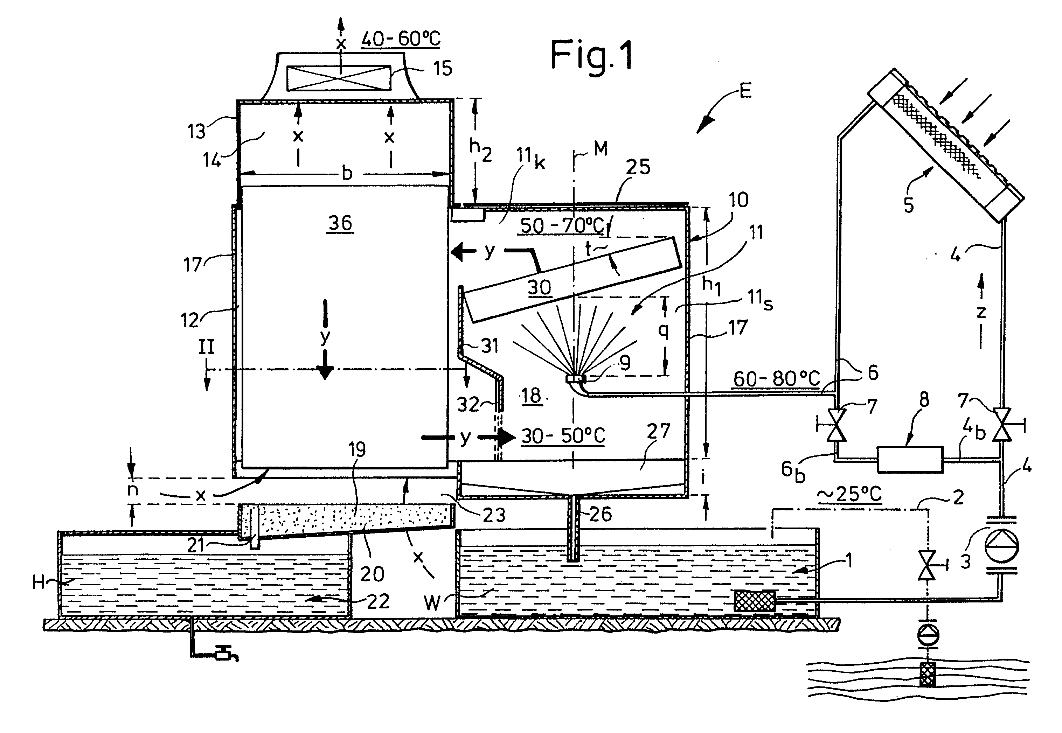

              in Fig. 1 und 4 bis 6 wiedergegebene Sprühdüse in etwa natürlicher Größe;


    Fig.   8: die Draufsicht auf Fig. 7.


In einem Becken 1 einer Anlage E ist salzhaltiges Wasser
W gelagert, das beispielsweise als Meerwasser mit 25° C
über eine Leitung 2 bedarfsweise zufließt.


                                                     - 10 -

Aus dem Becken 1 wird Salzwasser W von einer Pumpe 3
durch eine Steigleitung 4 Sonnenkollektoren 5 zugeführt, darin auf 60 bis 80° C erwärmt und in diesem Zustand
über wenigstens ein Zulaufrohr 6 zu einem Gehäuse 10
gebracht. Mit $4_b$ ist ein -- in Strömungsrichtung z vor
einem Absperrorgan 7 von der Steigleitung 4 abgehendes
-- Abzweigrohr bezeichnet, das ein alternativ zu jenen
Sonnenkollektoren 5 betreibbares Heizaggregat 8 über ein
Rohr $6_b$ an das genannte Zulaufrohr 6 anbindet. Als Heizaggregat 8 kann jede Art von Wärmetauscher oder Wärmegeber eingesetzt werden, der die Temperatur des Salzwassers
W auf 60° bis 80° C anhebt.

Das Gehäuse 10 einer Höhe $h_1$ von beispielsweise 1600 mm
umfängt einen Befeuchterraum 11 mit seitlich benachbartem Kondensatorraum 12, über welchem in einem Gehäuseaufsatz 13 ein Unterdruckraum 14 mit diesen überspannendem
Ventilator 15 vorgesehen ist. Die Höhe $h_2$ des Gehäuseaufsatzes 13 beträgt im gewählten Beispiel etwa 600 mm bei
einer Weite b von 1000 mm mit lichtem Querschnitt von
etwa 1 $m^2$.

An den dreiseitig -- von einer Gehäusestirnwand 17 sowie
zwei Gehäuseseitenwänden 18 -- begrenzten Kondensatorraum 12 schließt nach unten hin eine Fangschale 19 mit
geneigtem Boden 20 und Abflußrohr 21 an; letzteres mündet
in einem Rückhaltebecken 22 für entsalztes Wasser H. Die
Auffangschale 19 ist zur Bildung eines Luftspaltes 23 in
Abstand n zum Gehäuse 10 gehalten.

Den Befeuchtungsraum 11 umfangen beidseits der anderen
Gehäusestirnwand 17 die Gehäuseseitenwände 18. Er ist
nach oben hin von einem Deckel 25 verschlossen und an
seinem unteren Ende von einer trichterartig zu einem Auslauf 26 geneigten Bodenschale 27 einer Höhe e von hier 200 mm.

Etwa in der Mittelachse M des Befeuchtungsraumes 11
ist an der Mündung der/des Zufuhrrohre/s 6 wenigstens
eine Sprühdüse 9 angeordnet und über dieser/diesen in
einem mittleren Abstand q ein Einsatz mit Tropfenabscheiderprofilen 30. Letztere teilen den Befeuchtungsraum 11 in einen unteren Sprühraum $11_s$ und einen oberen
Kopfraum $11_k$.

Die Tropfenabscheiderprofile 30 sind zum Deckel 11/25
in einem spitzen Winkel t von der Gehäusestirnwand 17
abwärts geneigt bis zu einer Abweisschikane 31. Die Abweisschikane 31 -- oder gegebenenfalls eine bei 32
angedeutete durchlässige Lamellengarnitur -- soll
während des Betriebes der Anlage E einen Kurzschluß
zwischen einem von der Sprühdüse 9 aufsteigenden
Sprühnebel S und einen in Pfeilrichtung y umlaufenden
Primärluftkreis verhindern; dieser zieht von den Tropfenabscheiderprofilen 30 durch Luftspalte 35 zwischen
vertikal eingebauten Kondensatorplatten 36 im Kondensatorraum 12 abwärts und an deren unteren Kanten
in den Befeuchterraum 11 bzw. den Sprühraum $11_s$ zurück.

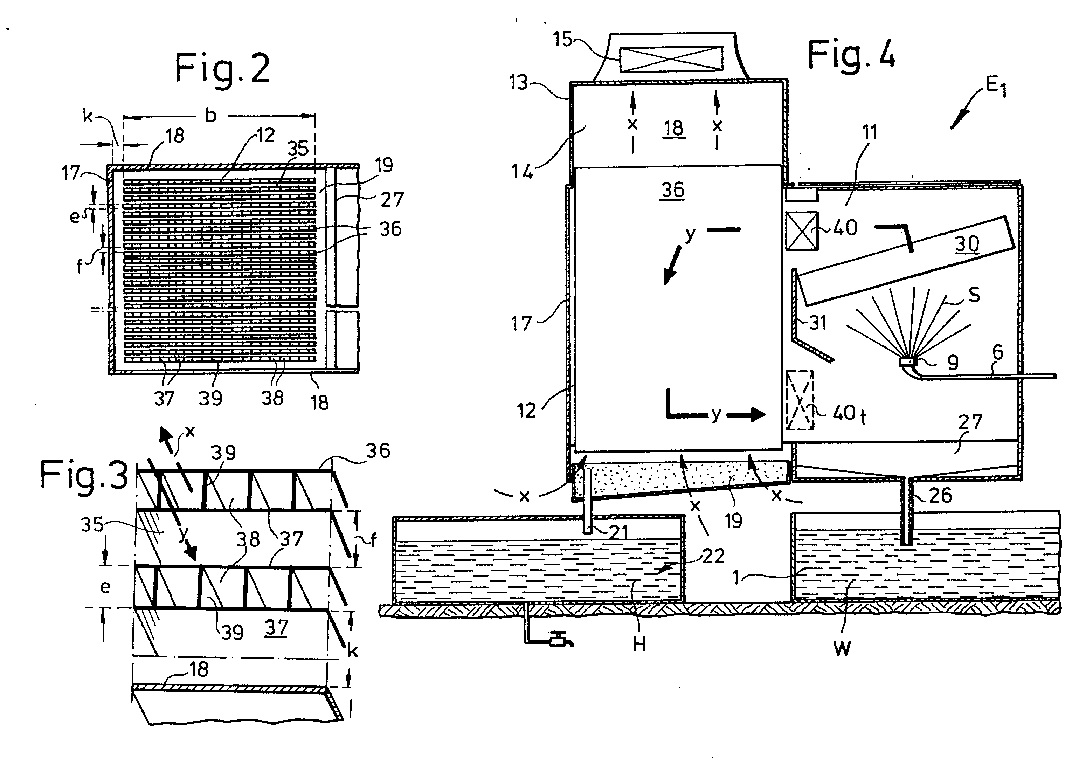

Wie insbesondere Fig. 3 verdeutlicht, besteht jede der
-- darin in etwa natürlichem Querschnitt wiedergegebenen,
aus Kunststoff gefertigten -- Kondensatorplatten 36
einer Breite e von beispielsweise 10 mm aus zwei dünnen
Plattenwänden 37, die unter Bildung vertikaler Luftkanäle 38 mittels durchgehender Querstege 39 verbunden sind. Der Luftspalt 35 zwischen zwei Kondensatorplatten 36 ist etwa 15 mm breit (Maß f in Fig. 3),
der Abstand k zwischen der GEhäusewand 17, 18 und der
benachbarten Kondensatorplatte 36 etwa 20 mm.

Mit dem Sprühnebel S werden aus der Sprühdüse 9 in einem -- durch Injektorwirkung und Thermik erzeugten -- Luftstrom mit beispielsweise 1 m/sec. Salzwasserpartikel durch die Tropfenabscheiderprofile 30 getragen. In letzteren werden grobe Tropfen ausgetrieben -- diese fallen abwärts zur Bodenschale 27 --, und ein aerosolfreies, hochgesättigtes Wasser/Luft-Gemisch mit etwa 100 % relativer Feuchte gelangt über die Tropfenabscheiderprofile 30 in jenen Kopfraum $11_k$. Die Aerosolfreiheit des Gemisches -- mit etwa 100 bis 150 g Wasser je $m^3$ Luft -- wird durch Abstimmung von Düsendruck einerseits und -- eckigen -- Tropfenabscheiderprofilen 30 erreicht.

Das Wasser/Luft-Gemisch mißt oberhalb der Tropfenabscheiderprofile 30 etwa 50° bis 70° C und fällt als Primärluftkreis y in den beschriebenen Luftspalten 35 abwärts, wobei die Feuchtelast an den Außenseiten der Plattenwände 37 kondensiert. Der so entwässerte Primärluftkreis y gelangt mit 30° bis 50° C in den Sprühraum $11_s$ des Befeuchterraumes 11 zurück, während das Kondensat als salzarmes Brauchwasser H an den Plattenwänden 37 abwärts zur Auffangschale 19 rieselt.

Im Gegenstrom zum Primärluftkreis y durchzieht Außenluft in einem Sekundärluftkreis (Pfeile x) die Luftkanäle 38 von unten nach oben und tritt am Ventilator 15 -- oder statt dessen aus einem Kaminaufbau -- mit 40 bis 60° C aus.

So werden ohne Dampferzeugung -- also unterhalb der
Grenze eines anderen Aggregatzustandes -- durch den
Sprühnebel (S) bei der beschriebenen Ausführungsform
E in Versuchsgröße beispielsweise 1300 1 Salzwasser W
je Betriebsstunde zu 20 1 Trink- oder Brauchwasser
mit einem Reinheitsgrad von 150 bis 300 mikrosiemens
aufbereitet. Der Energiebedarf liegt bei 6 kW für
den Fall, daß statt der Sonnenkollektoren 5 das
Heizaggregat 8 eingeschaltet ist - zuzüglich des
vernachläßigbar geringen Bedarfes für die Pumpe 3.

Während in Anlage E gemäß Fig. 1 der Primärluftkreis y
durch Injektorwirkung und Thermik erzeugt wird, ist
bei der Ausführungsform $E_1$ der Fig. 4 am oberen Übergang
vom Befeuchterraum 11 zum Kondensatorraum 12 ein Lüfter
40 vorgesehen, der einen Luftstrom von 3 bis 4 m/sec.
erzeugt - dieser oder ein weiterer Lüfter $40_t$ kann
auch unterhalb der Abweiserschikanen 31 angebracht
sein.

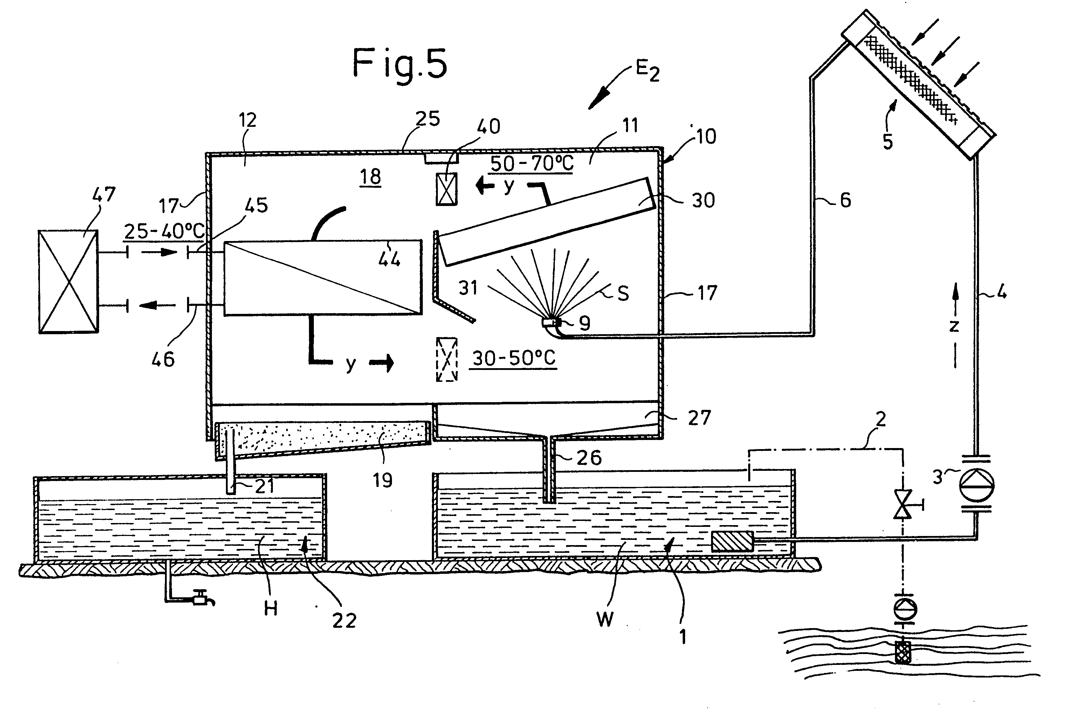

Die Anlage $E_2$ nach Fig. 5 läßt im Kondensatorraum 12 des
jeweils nach oben hin insgesamt vom Deckel 25 verschlossenen Gehäuses 10 ein Kühlregister 44 -- beispielsweise aus Rohrschlangen -- erkennen, an dessen
Außenfläche/n der Primärluftkreis y unter Kondensation
salzarmen Wassers H vorbeistreicht. Das Kühlregister 44
wird von einem Kühlmedium mit einer Temperatur von
beispielsweise 25° bis 40° C durchströmt; der Primärluftkreis y kühlt dabei -- wie bereits geschildert --
von 50° bis 70° C auf 30° bis 50° C ab.

Das Kühlregister 44 ist mit einem Zulauf- und einem
Ablaufstutzen 45 und 46 an einen Kühlmittelkreislauf
angeschlossen, in welchem beispielsweise ein bei 47
skizzenhaft angedeuteter Verdunstungskühler vorgesehen ist.

In Fig. 6 ist eine Anlage $E_3$ mit ebenfalls nach oben
hin geschlossenem Gehäuse 10 dargestellt. Im Bereich
des Kondensatorraumes 12 ragt in den Primärluftkreis y der kalte Teil 49 eines Wärmerohres 50 als
Kondensator ein. Das Wärmerohr 50 durchsetzt die
den Kondensatorraum 12 begrenzende Gehäusestirnwand
17, so daß das warme Ende 51 dieses Wärmerohres 50
in einen seitlichen Luftkasten 53 einragt. Diesen
durchströmt ein Sekundärluftstrom x unter Wärmeaustausch.

Die in Fig. 7 in natürlicher Größe dargestellte Sprühdüse 9 wird i.w. von einem Einlaufkörper 60 und einem
damit verbundenen Düsenkopf 61 gebildet, zwischen welchen
ein Düsenmundstück 62 lösbar festgelegt ist. In einem scheibenartigen Hauptkörper 63 des Einlaufkörpers 60 ist zentrisch
eine Kaverne oder Sprühkammer 64 mit zylindrischer Wandung
65 eingeformt; die Höhe a der Sprühkammer 64 entspricht
etwa dem geringfügig  kleineren Radius r des Wandungsgrundrisses und beträgt beispielsweise 18 mm.

In Abstand f von etwa 2 mm zum Kavernenboden 66 mündet
nahezu tangential ein Einlaufkanal 67 von etwa 40 mm
Länge, der sich von einem endwärtigen Kragenstück 68
zur Sprühkammer 64 hin von einem dem genannten Radius
r entsprechenden Durchmesser d auf einen Durchmesser $d_1$
halber Länge verjüngt.

Die Kanalachse $A_1$ schließt mit der Mittelachse A
von Kragenstück 68 und Hauptkörper 63 einen Winkel w
von beispielsweise 11° ein.

Auf das Außengewinde 69 des Kragenstückes 68 ist eine
Überwurfmutter 70 geschraubt, welche das Endstück 71
des Zulaufrohres 6 unter Zwischenschaltung eines
Dichtungsringes 72 an das Kragenstück 68 drückt.

Ein weiterer Dichtungsring 72 findet sich in der die
Sprühkammer 64 anbietenden Oberfläche des Hauptkörpers 63; diese Oberfläche wird seitlich begrenzt
durch eine Ringwand 73, deren Innengewinde das
Außengewinde des Düsenkopfes 61 aufnimmt. Letzterer
preßt den Radialkragen 74 des querschnittlich halbkreisförmigen Düsenmundstückes 62 gegen den Dichtungsring 72 der Oberfläche.

Die Weite zu der Sprühöffnung 76 des kalottenartigen
Düsenmundstückes 62 mißt im gewählten Beispiel 8 mm,
also etwa die halbe Höhe a der Sprühkammer 64.

Der Düsenkopf 61 ist unter Bildung zweier konzentrischer
Ausnehmungen 77, 78 unterschiedlicher Weite $P_1$, $P_2$ querschnittlich zweimal schulterartig abgesetzt.

Strömt nun Wasser unter Druck in die Sprühdüse 9, läuft
es etwa radial in die zylindrische Sprühkammer 64 ein
und wird in Sprührichtung Z durch die Sprühöffnung 76
gedrückt, außerhalb deren sich um eine spitzkegelige
Innenzone I eine schmale Mittelzone II (in Fig. 7
kariert) aus feinem Nebel (schwebende Partikel bis
Aerosole) sowie um diese ein Außenmantel III aus feinem
Sprühnebel bildet.

Die Spitze der Innenzone I liegt etwa in der Hälfte des
Sprührichtungsradius des Düsenmundstückes 62, also
z. B. 8 bis 9 mm oberhalb der Oberfläche des Hauptkörpers 63. Der Sprühwinkel $v_1$ mißt dann etwa 60°,
der anschließende Winkel $v_2$ zwischen den querschnittlichen
Grenzlinien 80, 81 der am Düsenmundstück 62 beginnenden
Mittelzone II: ca. 15°, während der benachbarte Winkel
$v_3$ zwischen den querschnittlichen Grenzlinien 81, 82
der Außenzone III weniger als 10° beträgt.

Das erwünschte Sprühbild mit zumindestens zwei Zonen II,
III feiner bis feinster Partikel und kreisförmigen Bewegungsbahnen des Sprühnebels ist nur durch die beschriebeneAusgestaltung von Sprühkammer 64 und Düsenmundstück 62 zu erzielen; eine größere Höhe a der Sprühkammer
64 oder eine querschnittliche Streckung des Düsenmundstückes 62 führen zu sehr groben Sprühnebeln mit unerwünscht spiralartigen Bewegungsbahnen.

PATENTANSPRÜCHE
=================================

1. Verfahren zum Entsalzen von Wasser, insbesondere von Meerwasser, unter Temperaturerhöhung,

dadurch gekennzeichnet,

daß salzhaltiges Wasser in einer ersten Stufe erwärmt und dann in einer zweiten Stufe zerstäubt wird, wonach das dabei entstehende Luft/Wasser-Gemisch als Primärluftkreis in einer weiteren Stufe einer Kondensation unterzogen wird.

2. Verfahren nach Anspruch 1, dadurch gekennzeichnet, daß vor der Kondensation das Luft/Wasser-Gemisch von Aerosolen befreit und/oder das erwärmte Luft/Wasser-Gemisch vor der Kondensation durch Tropfenabscheider geführt wird.

3. Verfahren nach Anspruch 1 oder 2, dadurch gekennzeichnet, daß die Kondensation des Wassers aus dem Primärluftkreis an Flächen erfolgt, die von einem Sekundärluftkreis gekühlt werden.

4. Verfahren nach Anspruch 3, dadurch gekennzeichnet, daß die Flächen vom Sekundärkreislauf im Gegenstrom gekühlt oder daß die Flächen vom kalten Teil eines Wärmerohres gebildet werden, dessen warmes Ende in den Sekundärluftkreis einragt.

- A 2 -

5. Verfahren nach Anspruch 1 oder 2, dadurch gekennzeichnet, daß die Kondensation des Wassers aus dem Primärluftkreis an wenigstens einem von einem Kühlmittel durchflossenen Kühlregister erfolgt.

6. Verfahren nach wenigstens einem der Ansprüche 1 bis 5, dadurch gekennzeichnet, daß das zu entsalzende Wasser auf etwa 50° bis 90° C, bevorzugt etwa 60° C, erwärmt und nach dem Versprühen auf 40 bis 80° C, bevorzugt etwa 50° C abgekühlt wird, und daß gegebenenfalls die Abkühlung durch die Tropfenabscheider erfolgt, bei der ein Luft/Wasser-Gemisch mit etwa 100 % relativer Feuchte entsteht.

7. Verfahren nach wenigstens einem der Ansprüche 1 bis 6, dadurch gekennzeichnet, daß der Primärluftkreis während der Kondensation auf etwa 25 bis 60° C, bevorzugt etwa 30° C, abgekühlt und/oder während der Kondensation abwärts strömt, um am Ende der Kondensation der Sprühstufe zugeführt zu werden.

8. Verfahren nach wenigstens einem der Ansprüche 1 bis 7, dadurch gekennzeichnet, daß der Sekundärkreislauf durch Umgebungsluft gebildet wird.

9. Vorrichtung zum Entsalzen von Wasser, insbesondere von Meerwasser, mit einem Wärmegeber, dadurch gekennzeichnet, daß einem Sprühraum (11$_s$) mit wenigstens einer Sprühdüse (9) für das in einem Primärluftkreis (y) einzuspeisende Salzwasser (W) ein Kondensationsraum (12) mit gekühlter Kondensationsfläche (37; 44; 49) nachgeschaltet ist.

                                        - A 3 -

10. Vorrichtung nach Anspruch 9, dadurch gekennzeichnet, daß der Sprühdüse (9) in Sprührichtung wenigstens ein Tropfenabscheiderprofil (30) nachgeordnet ist, das bevorzugt zu einem Kondensationsraum (12) abwärts geneigt verläuft, wobei die Sprühdüse (9) sowie die Tropfenabscheiderprofile (30) vorteilhafterweise aufeinander zur Erzeugung eines aerosolfreien Luft/Wasser-Gemisches abgestimmt sind.

11. Vorrichtung nach Anspruch 9 oder 10, dadurch gekennzeichnet, daß den Tropfenabscheiderprofilen (30) als Kondensationsflächen in Abstand (f) zueinander vorgesehene Wandungen (37) nachgeordnet sind, die wechselnd benachbarte Strömungsräume (35 und 38) für den Primärluftkreis (y) und einen Sekundärluftkreis (x) bilden, wobei gegebenenfalls zwei Wandungen (37) mittels sie verbindender, durchgehender Querstege (39) eine Kondensatorplatte (36) mit Luftkanälen (38) bilden und mehrere dieser Kondensatorplatten in Abstand (f) zueinander im Kondensatorraum (12) vorgesehen sind.

12. Vorrichtung nach Anspruch 11, dadurch gekennzeichnet, daß die Kondensationsflächen (37) bzw. die Kondensatorplatten (36) im Kondensatorraum (12) etwa vertikal angeordnet sind und/oder die Kondensatorplatte (36) aus -- gegebenenfalls transluzentem -- Kunststoff besteht.

- A 4 -

13. Vorrichtung nach einem der Ansprüche 9 bis 12, dadurch gekennzeichnet, daß den Tropfenabscheiderprofilen (30) als Kondensationsfläche/n ein von Kältemittel durchströmtes Kühlregister (44) nachgeordnet ist, welches gegebenenfalls in den Kühlmittelkreislauf eines Verdunstungskühlers (47) eingefügt ist.

14. Vorrichtung nach wenigstens einem der Ansprüche 9 bis 13, dadurch gekennzeichnet, daß den Tropfenabscheiderprofilen (30) als Kondensationsfläche/n ein Teil (49) eines Wärmerohres (50) nachgeschaltet ist, dessen anderer Teil (51) höherer Temperatur außerhalb des Kondensationsraumes (12) liegt.

15. Vorrichtung nach Anspruch 13 oder 14, dadurch gekennzeichnet, daß das warme Ende (51) des Wärmerohres (50) in einen Sekundärluftkreis (x) einragt, gegebenenfalls in einen seitlich dem Gehäuse (10) zugeordneten kaminartigen Anbau (53), der etwa vertikal vom Sekundärluftkreis (x) durchzogen ist.

16. Vorrichtung nach wenigstens einem der Ansprüche 9 bis 15, dadurch gekennzeichnet, daß die Sprühdüse (9) am Ende eines erwärmtes Salzwasser (W) führenden Zulaufrohres (6) unterhalb der Tropfenabscheiderprofile (30) und in Abstand (q) zu diesen angebracht ist, wobei oberhalb der Tropfenabscheiderprofile ein Kopf- oder Sammelraum ($11_k$) für ein gesättigtes Luft/Wasser-Gemisch vorgesehen und gegegenenfalls die Sprühdüse (9) etwa in der Mittelachse (M) des mit den Tropfenabscheiderprofilen (30) versehenen Befeuchterraumes (11) angeordnet ist.

17. Vorrichtung nach wenigstens einem der Ansprüche 9 bis 16, dadurch gekennzeichnet, daß das Zulaufrohr (6) für die Sprühdüse (9) wenigstens einen Sonnenkollektor (5) tangiert, wobei bevorzugt das Zulaufrohr (6) für die Sprühdüse (9) über den Sonnenkollektor (5) und/oder einen konventionellen Wärmegeber (8) mit einer Salzwasserquelle (1 ) verbunden ist.

18. Vorrichtung nach wenigstens einem der Ansprüche 9 bis 17, dadurch gekennzeichnet, daß die Tropfenabscheiderprofile (30) an Abweiseschikanen (31) od. dgl. Trennelemente enden, welche zwischen Befeuchtungsraum (11) und Kondensationsraum (12) angeordnet sind, wobei gegebenenfalls den Abweiseschikanen (31) vom Primärluftkreis (y) durchsetzbare Lamelleneinbauten (32) zugeordnet sind.

19. Vorrichtung nach wenigstens einem der Ansprüche 9 bis 18, dadurch gekennzeichnet, daß im Primärluftkreis (y) wenigstens ein Lüfter (40) vorgesehen sowie gegebenenfalls zwischen Befeuchterraum (11) und Kondensationsraum (12) angeordnet ist, der bevorzugt zusammen mit dem Befeuchterraum (11) von einem gemeinsamen Gehäuse (10) umgeben ist
und/oder daß Befeuchtungsraum (11) und Kondensationsraum (12) nebeneinander verlaufen.

20. Vorrichtung nach wenigstens einem der Ansprüche
9 bis 19, dadurch gekennzeichnet, daß Befeuchtungsraum (11) und Kondensationsraum (12) nach
oben hin geschlossen sind, oder daß der Befeuchtungsraum (11) nach oben geschlossen sowie
oberhalb des Kondensationsraumes (12) wenigstens
ein Lüfter (15) für den Sekundärluftkreis (x)
angeordnet ist.

21. Verwendung einer Sprühdüse zum Entsalzen von Wasser,
welche eine etwa tangential beaufschlagte Sprühkammer (64) sowie etwa in deren Mittelachse an
einem Düsenmundstück (62) eine Sprühöffnung (76)
aufweist, wobei das Düsenmundstück einen kalottenartigen Innenraum aufweist, der die Sprühkammer
querschnittlich halbkreisförmig überspannt, wobei
die Höhe (a) der Sprühkammer etwa dem Radius (r)
des Innenraumquerschnittes des Düsenmundstückes
entspricht.

22. Vorrichtung zu Anspruch 21, dadurch gekennzeichnet, daß das Düsenmundstück (12) zwischen einem
die Sprühkammer (64) aufnehmenden Düsenkörper
und einem mit diesem lösbar verbundenen Düsenkopf (61) auswechselbar angebracht ist, und/oder
daß ein kalottenartig geformtes Werkstück mit radial abstehendem Kragen an diesem zwischen Düsenkörper und Düsenkopf klemmend gehalten ist, wobei die Höhe (a) der Sprühkammer (64) etwa der zweifachen Weite der Sprühöffnung (76) entspricht.

23. Vorrichtung nach Anspruch 21 oder 22, dadurch gekennzeichnet, daß die Spitze eines sich während des Sprühvorganges bildenden Sprühkegels etwa auf dem halben Sprührichtungs- radius des Düsenmundstückes (62) liegt und der spitze Winkel des Sprühkegels (I) etwa 60° beträgt, wobei gegebenenfalls den Sprühkegel (I) ein sich vom Düsenmundstück (60) ab erweiternder Mantel aus feinen Nebeln entsteht, den ein Außenmantel aus feinem Sprühnebel umgibt, in welchem die Sprühpartikel kreisförmig bewegbar sind.

Fig.1

40-60°C
50-70°C
60-80°C
30-50°C
~25°C

E

1/5

0099320

# Fig. 2

# Fig. 3

# Fig. 4

Fig.5

# Fig.6

E₃

0099320

0099320

Fig. 8

Fig. 7